# EUROPÄISCHE PATENTSCHRIFT

(11) **EP 1 553 278 B1**
(45) Veröffentlichungstag und Bekanntmachung des Hinweises auf die Patenterteilung: **10.01.2007**
(21) Anmeldenummer: 04021080.9
(22) Anmeldetag: 04.09.2004
(51) Int. Cl.: F02D 11/10

(54) **Sensoranordnung für eine Klappenvorrichtung in einem Luftansaugkanalsystem**
Sensor device for a flap device for an air intake system
Dispositif capteur pour un dispositif à volets pour système d'entrée d'air

(30) Priorität: 20.12.2003 DE 10360234
(43) Veröffentlichungstag der Anmeldung: 13.07.2005
(73) Patentinhaber: Pierburg GmbH, 41460 Neuss (DE)
(72) Erfinder: Sovva, Elina, 47167 Duisburg (DE); Hüsges, Hans-Jürgen, 47877 Willich (DE)
(74) Vertreter: Ter Smitten, Hans

(56) Entgegenhaltungen:
- EP-A- 1 061 341
- EP-A- 1 069 400
- US-A- 4 893 502
- US-A- 5 070 728

## Beschreibung

Die Erfindung betrifft ein Luftansaugkanalsystem für eine Verbrennungskraftmaschine, wobei das Luftansaugkanalsystem ein zumindest zweiteiliges Gehäuse aufweist, in welchem Luftansaugkanäle und Ausnehmungen ausgebildet sind, in welche die Klappenvorrichtung über zumindest ein Lagerelement formschlüssig einlegbar ist, wobei die Klappenvorrichtung eine Welle, die von einer Stellvorrichtung antreibbar ist, zumindest einen auf der Welle angeordneten Klappenkörper und zumindest das eine Lagerelement aufweist, über welches die Welle der Klappenvorrichtung drehbar im Luftansaugkanalsystem gelagert ist.

Klappenvorrichtungen in Luftansaugkanalsystemen sind allgemein bekannt und werden in einer Vielzahl von Anmeldungen beschrieben. Sie dienen beispielsweise als Schaltklappen zur Verstellung der Saugrohrschwinglänge oder auch als Tumble- oder Drallklappen zur Verbesserung der Zylinderfüllung.

Eine derartige Klappenvorrichtung wird am Beispiel einer Schaltklappenvorrichtung in einem Luftansaugkanalsystem in der DE 196 14 474 beschrieben. Auch in der noch nicht veröffentlichten Anmeldung mit dem Aktenzeichen 102 36 393.5 wird eine solche Klappenvorrichtung anhand einer Tumbleklappenvorrichtung beschrieben. Die auf der Welle angeordneten Klappenkörper werden mit der Welle und um die Welle angeordneten Lagerelementen in ein erstes Gehäuseteil eingelegt. Das jeweils zweite Gehäuseteil kann anschließend auf das erste Gehäuseteil aufgesetzt werden, wodurch die Klappenvorrichtung mit den Lagerelementen eine feste Lage im Gehäuse erhält. Die Lagerückmeldung oder Positionserfassung der Klappen erfolgt in der Regel über in einer Stellvorrichtung angeordnete Sensoren.

Eine solche Anordnung eines berührungslosen Sensors ist beispielsweise aus der DE 101 33 631 A1 bekannt, bei der ein berührungsloser Sensor am Deckel einer Drosselklappenstellvorrichtung angeordnet ist, welcher mit einem Magneten, der auf der Welle der Drosselklappe angeordnet ist, in Wirkverbindung steht.

Durch das Anbringen der Sensorelemente an den Stellvorrichtungen oder auch an zu den jeweiligen Wellen der Klappenvorrichtung weisenden Ausnehmungen im Gehäuse entsteht jedoch der Nachteil, dass aufgrund von Lagetoleranzen der einzelnen Bauteile zueinander also beispielsweise des Deckels zur Welle oder auch aufgrund von Gußtoleranzen der Gehäuseteile, Fehlfunktionen der Signale der Sensorelemente die Folge sind, da eine definierte exakte Lage des Sensors zum Magneten nicht sichergestellt werden kann. Des weiteren kann eine eventuell erfolgende leichte Torsion der Welle zu Fehlsignalen führen, da die zumeist am Wellenanfang angeordneten Sensorelemente die tatsächliche Verdrehung des Wellenendes nicht aufnehmen können.

Aufgabe der Erfindung ist es daher, ein Luftansaugkanalsystem mit einer Sensoranordnung zu schaffen, mit der eine exakte Lagerückmeldung der Klappenstellung ermöglicht wird, ohne dass zusätzliche Kosten durch engere Toleranzen oder zusätzliche Sensorelemente entstehen.

Diese Aufgabe wird dadurch gelöst, daß auf der Welle ein Magnet angeordnet ist, welcher mit einem berührungslosen Sensor zur Lagerückmeldung in Wirkverbindung steht, wobei der Sensor in einem Zentrierring angeordnet ist, welcher einstückig mit dem zumindest einen Lagerelement ausgebildet ist. Durch eine solche Anordnung wird eine lagegenaue Positionierung des Sensors zur Tumblewelle beziehungsweise zum Tumblewellenende erreicht. Die Lagerung und Fixierung des Sensors und der Welle erfolgen somit am gleichen Bauteil, nämlich dem Lagerelement, wodurch der Sensor immer in zur Welle festgelegter Lage angebracht wird, so dass ein Signal vom Sensor zur Auswerteeinheit gegeben wird, welches exakt auf die Stellung der Welle und somit der Klappenkörper rückschließen läßt. Somit werden Fehlfunktionen durch auftretende Gußtoleranzen vermieden.

In einer weiterführenden Ausführungsform weist eines der Gehäuseteile eine Durchgangsöffnung auf, durch die der Sensor, welcher ein Sensorgehäuse aufweist, nach dem Zusammenbau der beiden Gehäuseteile von außen in den Zentrierring steckbar ist. Eine solche Anordnung ermöglicht die Montage nach Zusammenbau der Gehäuseteile und zusätzlich einen einfachen elektrischen Anschluß zu einer Auswerteeinheit.

Zur rotatorischen Lagefixierung des Sensors zur Welle ist das Sensorgehäuse drehfest im Zentrierring angeordnet.

In einer dazu weiterführenden Ausführungsform weist der Zentrierring eine Abflachung auf, welche mit einer Abflachung des Sensorgehäuses korrespondiert, wodurch die drehfeste Sitz des Sensorgehäuses im Zentrierring auf einfache Weise verwirklicht wird.

In einer bevorzugten Ausführungsform sind die inneren Abmessungen der Durchgangsöffnung in dem einen Gehäuseteil größer als die in der Durchgangsöffnung angeordneten äußeren Abmessungen des Sensorgehäuses, wobei das Sensorgehäuse eine Auflagefläche aufweist, welche unter Zwischenlage einer Dichtung auf einer senkrecht zur Achse der Durchgangsöffnung gelegenen Außenfläche des Gehäuses angeordnet ist. Hierdurch wird der Abstand zwischen dem Sensor und dem auf der Welle befindlichen Magneten definiert und gleichzeitig ein dichter Verschluß zwischen dem Sensor und dem Gehäuseinneren durch die axiale Abdichtung sicher gestellt, so dass keine Leckluft entweichen oder eindringen kann.

Zusätzlich kann das Sensorgehäuse einen Stecker zur elektrischen Verbindung zu einer Auswerteeinheit aufweisen, welcher je nach Kundenwunsch angepaßt werden kann. Die Verbindung zur Auswerteeinheit kann hierdurch nach Zusammenbau des gesamten Luftansaugkanalsystems bzw. Einbau im Verbrennungsmotor durch einfaches Einstecken stattfinden.

In einer weiterführenden Ausführungsform weist das Sensorgehäuse eine Ausstülpung auf, in der eine Durchgangsbohrung ausgebildet ist, durch welche beim Einstecken des Sensors in den Zentrierring ein Vorsprung ragt, der außen an dem einen Gehäuseteil angeordnet ist, so daß der Sensor mittels einer Befestigungsschraube, insbesondere unter Zwischenlage einer Unterlegscheibe, welche in eine Bohrung, die im Vorsprung ausgebildet ist, mit dem einen Gehäuseteil kraftschlüssig verbindbar ist. Hierdurch wird eine sichere Befestigung des Sensors erreicht, wobei eine gute Erreichbarkeit und somit einfache Montage nach Zusammenbau des Luftansaugkanalsystems gewährleistet ist. Des weiteren bleibt der Sensor austauschbar, ohne das Luftansaugkanalsystem demontieren zu müssen.

In einer bevorzugten Ausführungsform ist die Klappenvorrichtung in korrespondierende Ausnehmungen des ersten Gehäuseteils einlegbar, die Durchgangsöffnung im zweiten Gehäuseteil senkrecht zur Welle ausgebildet und der Magnet ein um die Welle angeordneter Ringmagnet, der in Wirkverbindung mit dem Sensor steht, welcher durch die Durchgangsöffnung in den Zentrierring ragt, welcher zwischen der Welle und dem zweiten Gehäuseteil angeordnet ist, und dessen Längsachse senkrecht auf die Achse der Welle steht. Eine derartige Ausführung optimiert die Funktion des Sensors zur Lagerückmeldung, da die jeweiligen Lagen der Einzelteile zueinander optimiert festgelegt sind, so dass der Sensor jeweils im gleichen Abstand und Winkel zur Welle und somit auch zum Ringmagneten angeordnet ist. Dies ermöglicht eine fehlerfreie Funktion der Lagerückmeldung.

In einer weiterführenden Ausführungsform ist der Zentrierring an dem zur Stellvorrichtung entfernten Ende der Klappenvorrichtung am letzten Lagerelement angeordnet und der korrespondierende Ringmagnet auf dem Ende der Welle. Eine solche Anordnung erleichtert die Montierbarkeit sowohl des Magneten als auch im weiteren des Sensors im Zentrierring, da eine gute Erreichbarkeit der Einzelteile verwirklicht ist. Außerdem wird auch bei leichter Torsion oder gar Bruch der Welle die tatsächliche Klappenendstellung gemessen, so dass bei einem Vergleich des Sollwertes der Stellvorrichtung mit dem Istwert der Lagerückmeldung in einer Regelung auch Fehler detektiert werden können.

In einer weiterführenden Ausführungsform weist der Zentrierring ein in Achsrichtung des Zentrierringes verlaufenden umlaufenden Steg auf, welcher in eine korrespondierende Ausnehmung im zweiten Gehäuseteil ragt, welche im wesentlichen in Form einer Querschnittserweiterung der Durchgangsöffnung im zum ersten Gehäuseteil weisenden Bereich der Durchgangsöffnung ausgebildet ist. Hierdurch wird automatisch die Lage des zweiten Gehäuseteils zum Zentrierring festgelegt, wodurch Fehler bei der Montage, beispielsweise bei Verkanten der beiden Gehäuseteile zueinander, zuverlässig vermieden werden.

Eine Ausführungsform einer erfindungsgemäßen Sensoranordnung ist in den Zeichnungen dargestellt und wird nachfolgend beschrieben.
Figur 1 zeigt eine Seitenansicht eines Ausschnitts eines Luftansaugkanalsystems mit erfindungsgemäßer Sensoranordnung in schematischer geschnittener Darstellung.
Figur 2 zeigt in perspektivischer Darstellung die Klappenvorrichtung mit erfindungsgemäßer Sensoranordnung ohne Gehäuse des Luftansaugkanalsystems.

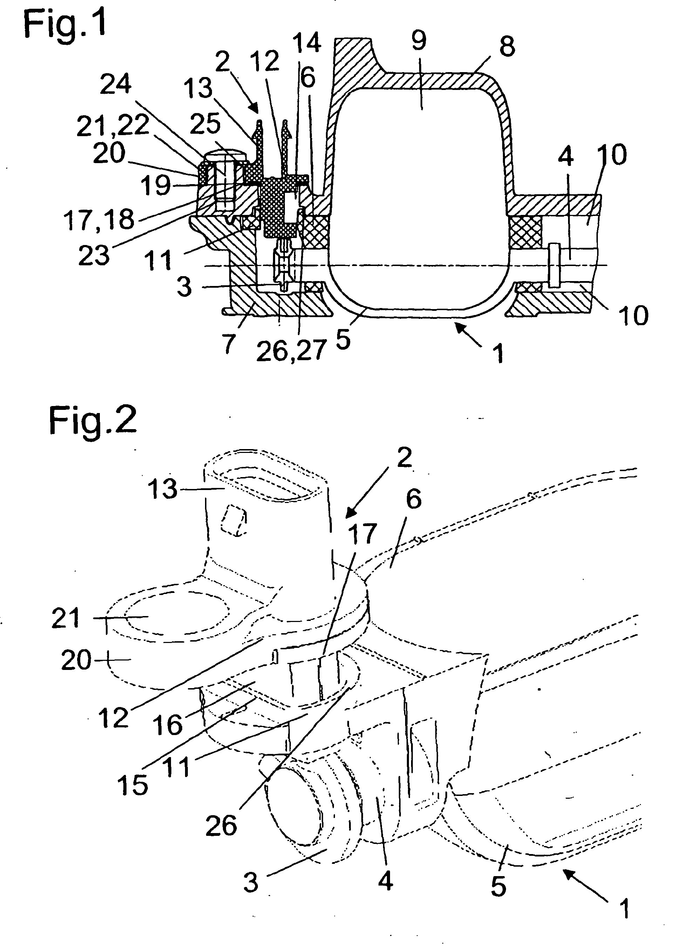

Die in Figur 1 dargestellte erfindungsgemäße Sensoranordnung für eine Klappenvorrichtung 1 in einem Luftansaugkanalsystem besteht im wesentlichen aus einem berührungslosen Sensor 2, welcher in Wirkverbindung mit einem als Ringmagnet ausgebildeten Magneten 3 steht, so daß je nach Stellung des Ringmagneten 3 zum Sensor 2 ein unterschiedliches elektrisches Signal in einer nicht dargestellten mit dem Sensor 2 verbundenen Auswerteeinheit erzeugt wird, welches ein Maß für die Stellung der Klappenvorrichtung 1 ist. Die Klappenvorrichtung 1 besteht aus einer Welle 4, die im vorliegenden Ausführungsbeispiel einstückig mit Klappenkörpern 5, die im wesentlichen u-förmig ausgebildet sind, hergestellt ist. Die Welle 4 und somit die gesamte Klappenvorrichtung 1 wird über Lagerelemente 6 im Luftansaugkanalsystem gelagert. Dieses Luftansaugkanalsystem besteht aus einem ersten Gehäuseteil 7, welches im vorliegenden Ausführungsbeispiel das Saugrohrunterteil bildet, sowie einem zweiten Gehäuseteil 8, welches im vorliegenden Ausführungsbeispiel das Saugrohroberteil bildet. Im zusammen gesetzten Zustand bilden diese beiden Gehäuseteile 7, 8 Luftansaugkanäle 9, welche zu den Zylindern der Verbrennungskraftmaschine führen.

Die Lagerelemente 6 der Klappenvorrichtung 1 sind so ausgebildet, daß sie zum Teil ebenfalls die Luftansaugkanäle 9 bilden, wobei die gesamte Klappenvorrichtung 1 mit den Lagerelementen 6 mit entsprechenden Ausnehmungen 10 der beiden Gehäuseteile 7 und 8 korrespondieren. Der Zusammenbau erfolgt, indem die Klappenvorrichtung 1 mit ihren Lagerelementen 6 zunächst in die Ausnehmungen 10 des Saugrohrunterteils 7 eingelegt wird und später das Saugrohroberteil 8 mit seinen wiederum mit den Lagerelementen 6 korrespondierenden Ausnehmungen 10 aufgesetzt und befestigt, beispielsweise verschraubt wird. Die Klappenvorrichtung 1 ist an ihrem nicht dargestellten Ende mit einer Stellvorrichtung verbunden, über welche die Klappen je nach anliegender Last des Verbrennungsmotors verstellt werden können.

Aus Figur 2 wird ersichtlich, daß am zur Stellvorrichtung entgegengesetzten Ende der Welle 4 der Klappenvorrichtung 1 ein Ringmagnet 3 angeordnet ist, welcher mit dem Sensor 2 in vorbeschriebener Weise zusammen wirkt. Der Sensor 2 ist dabei erfindungsgemäß über einen Zentrierring 11 und somit zum Ende der Welle 4 beziehungsweise zum Ringmagneten 3 positioniert, wobei der Zentrierring 11 einstückig mit dem Lagerelement 6 ausgebildet ist. Zum Anbringen des Sensors 2 der aus einem Sensorgehäuse 12 und dem Sensorelement selbst sowie einem am Sensorgehäuse 12 angeordneten Stecker 13 besteht, über den die Verbindung zu einer nicht dargestellten Auswerteeinheit hergestellt werden kann, wird dieser durch eine im oberen Gehäuseteil 8 ausgebildeten Durchgangsöffnung 14 geschoben. Diese ist im wesentlichen in der gleichen Achsrichtung wie der Zentrierring 11 ausgebildet, so dass nach dem Einstecken des Sensors dieser drehfest im Zentrierring 11 angeordnet ist. Hierzu weist der Zentrierring 11 zumindest an seiner Innenwand eine Abflachung 15 auf, welche mit einer Abflachung 16 an der Außenwand des Sensorgehäuses 12 im nach dem Zusammenbau im Zentrierring 11 liegenden Bereich korrespondiert, wodurch ein Verdrehen der Bauteile relativ zueinander zuverlässig vermieden wird. Des weiteren ist durch die einstückige Ausführung des Zentrierrings 11 mit dem letzten Lagerelement 6 die relative Lage des Sensors 2 zum Ringmagneten 11 fixiert, wobei im vorliegenden Ausführungsbeispiel die Wellenachse und die Achse des Sensorgehäuses 12 bzw. des Zentrierrings 11 im 90°-Winkel aufeinander stehen.

Um des weiteren den Abstand des Sensors 2 zum Ringmagneten 3 zu definieren, weist das Sensorgehäuse 12 eine Auflagefläche 17 auf, die an einer Außenfläche 18 des Gehäuseteils 8 unter Zwischenlage einer Dichtung 19 aufliegt, so daß die Höhe des Sensors 2 festgelegt ist. Aus Figur 1 ist zu erkennen, daß die Durchgangsöffnung 14 des Gehäuseteils 8 größer ausgebildet ist, als die innere Öffnung des Zentrierringes 11, so dass die Zentrierung lediglich allein durch den Zentrierring 11 gewährleistet wird. Entsprechend ist jedoch auch die Abdichtung des Saugrohrinneren gegenüber der Atmosphäre durch die Dichtung 19 erforderlich, welche somit in Einsteckrichtung also in Achsrichtung des Sensors 2 erfolgt. Zur Befestigung des Sensors 2 in dieser Stellung weist das Sensorgehäuse 12 eine Ausstülpung 20 auf, in der eine Durchgangsbohrung 21 ausgebildet ist, in welche nach dem Einstecken des Sensors 2 ein Vorsprung 22 des oberen Gehäuseteiles 8 ragt. Dieser Vorsprung 22 weist eine Sacklochbohrung 23 auf, so daß das Sensorgehäuse mittels einer selbstfurchenden Befestigungsschraube 24 unter Zwischenlage einer Unterlegscheibe 25 am oberen Gehäuseteil 8 befestigt werden kann. Des weiteren weist der Zentrierring 11 am zur Öffnung 14 hinweisenden Bereich einen umlaufenden Steg 26 auf, welcher in eine Ausnehmung 27 eingreift, die im oberen Gehäuseteil 8 ausgebildet ist und im wesentlichen die Durchgangsöffnung 14 im zum ersten Gehäuseteil 7 weisenden Bereich erweitert. Hierdurch wird die korrekte Lage des Gehäuseoberteils 8 zum letzten Lagerelement 6 sowie zum unteren Gehäuseteil 7 beim Zusammenbau sicher gestellt.

Das dargestellte Ausführungsbeispiel eignet sich als Tumbleklappenvorrichtung mit Lagerückmeldung zur Verbesserung der Zylinderfüllung in einem Verbrennungsmotor. Durch die gewählte Sensorzentrierung über den am Lagerelement 6 angeordneten Zentrierring 11 wird eine exakte Lagefixierung zwischen dem Sensor und dem auf der Welle angeordneten Magneten 3 sicher gestellt, so daß Fehlfunktionen bedingt durch eine falsche Lage des Sensors 2 durch Gußtoleranzen der Gehäuseteile 7,8 ausgeschlossen werden können, wobei dennoch die Befestigung weiterhin von außen am Saugrohroberteil 8 erfolgen kann.

Aus dem Vorbeschriebenen sollte deutlich sein, daß auch andere Einsatzgebiete im Bereich von Verbrennungsmotoren beispielsweise an Schalt- oder Drallklappen, wobei auch die Form der Klappen variierbar ist, möglich sind, ohne den Inhalt der Patentansprüche zu verlassen. Dabei ist es sicherlich auch denkbar anders ausgeführte Lagerelemente, beispielsweise einzelne auf der Welle angeordnete Lagerelemente ohne kanalbildende Teile zu verwenden oder auf die Welle montierte Klappen in gleicher Weise zu benutzen. Ebenso ist es möglich, die Befestigung des Sensorgehäuses am Gehäuseoberteil, die Form des Sensorgehäuses oder die Lage des Sensors zur Welle innerhalb des Schutzbereiches der Patentansprüche zu verändern.

## Patentansprüche

1. Luftansaugkanalsystem für eine Verbrennungskraftmaschine, wobei das Luftansaugkanalsystem ein zumindest zweiteiliges Gehäuse aufweist, in welchem Luftansaugkanäle und Ausnehmungen ausgebildet sind, in welche eine Klappenvorrichtung über zumindest ein Lagerelement formschlüssig einlegbar ist, wobei die Klappenvorrichtung eine Welle, die von einer Stellvorrichtung antreibbar ist, zumindest einen auf der Welle angeordneten Klappenkörper und zumindest das eine Lagerelement aufweist, über welches die Welle der Klappenvorrichtung drehbar im Luftansaugkanalsystem gelagert ist, **dadurch gekennzeichnet, daß** auf der Welle (4) ein Magnet (3) angeordnet ist, welcher mit einem berührungslosen Sensor (2) zur Lagerückmeldung in Wirkverbindung steht, wobei der Sensor (2) in einem Zentrierring (11) angeordnet ist, welcher einstückig mit dem zumindest einen Lagerelement (6) ausgebildet ist.

2. Luftansaugkanalsystem für eine Verbrennungskraftmaschine nach Anspruch 1, **dadurch gekennzeichnet, daß** eines der Gehäuseteile (7, 8) eine Durchgangsöffnung (14) aufweist, durch die der Sensor (2), welcher ein Sensorgehäuse (12) aufweist, nach dem Zusammenbau der beiden Gehäuseteile (7, 8) von außen in den Zentrierring (11) steckbar ist.

3. Luftansaugkanalsystem für eine Verbrennungskraftmaschine nach einem der Ansprüche 1 oder 2, **dadurch gekennzeichnet, daß** das Sensorgehäuse (12) drehfest im Zentrierring (11) angeordnet ist.

4. Luftansaugkanalsystem für eine Verbrennungskraftmaschine nach Anspruch 3, **dadurch gekennzeichnet, daß** der Zentrierring (11) eine Abflachung (15) aufweist, welche mit einer Abflachung (16) des Sensorgehäuses (12) korrespondiert.

5. Luftansaugkanalsystem für eine Verbrennungskraftmaschine nach einem der Ansprüche 2 bis 4, **dadurch gekennzeichnet, daß** die inneren Abmessungen der Durchgangsöffnung (14) in dem einen Gehäuseteil (7, 8) größer sind als die in der Durchgangsöffnung (14) angeordneten äußeren Abmessungen des Sensorgehäuses (12), wobei das Sensorgehäuse (12) eine Auflagefläche (17) aufweist, welche unter Zwischenlage einer Dichtung (19) auf einer senkrecht zur Achse der Durchgangsöffnung (14) gelegenen Außenfläche (18) des Gehäuseteiles (7, 8) angeordnet ist.

6. Luftansaugkanalsystem für eine Verbrennungskraftmaschine nach einem der vorhergehenden Ansprüche, **dadurch gekennzeichnet, daß** das Sensorgehäuse (12) einen Stecker (13) zur elektrischen Verbindung zu einer Auswerteeinheit aufweist.

7. Luftansaugkanalsystem für eine Verbrennungskraftmaschine nach einem der Ansprüche 2 bis 6, **dadurch gekennzeichnet, daß** das Sensorgehäuse (12) eine Ausstülpung (20) aufweist, in der eine Durchgangsbohrung (21) ausgebildet ist, durch welche beim Einstecken des Sensors (2) in den Zentrierring (11) ein Vorsprung (22) ragt, der außen an dem einen Gehäuseteil (7, 8) angeordnet ist, so daß der Sensor (2) mittels einer Befestigungsschraube (24) insbesondere unter Zwischenlage einer Unterlegscheibe (25), welche in eine Bohrung (23) Schraubbar ist die im Vorsprung (22) ausgebildet ist, mit dem einen Gehäuseteil (7, 8) kraftschlüssig verbindbar ist.

8. Luftansaugkanalsystem für eine Verbrennungskraftmaschine nach einem der Ansprüche 2 bis 7, **dadurch gekennzeichnet, daß** die Klappenvorrichtung (1) in korrespondierende Ausnehmungen (10) des ersten Gehäuseteils (7) einlegbar ist, die Durchgangsöffnung (14) im zweiten Gehäuseteil (8) senkrecht zur Welle (4) ausgebildet ist und der Magnet (3) ein um die Welle (4) angeordneter Ringmagnet ist, der in Wirkverbindung mit dem Sensor (2) steht, welcher durch die Durchgangsöffnung (14) in den Zentrierring (11) ragt, welcher zwischen Welle (4) und zweitem Gehäuseteil (8) angeordnet ist, und dessen Längsachse senkrecht auf die Achse der Welle (4) steht.

9. Luftansaugkanalsystem für eine Verbrennungskraftmaschine nach Anspruch 8, **dadurch gekennzeichnet, daß** der Zentrierring (11) an dem zur Stellvorrichtung entfernten Ende der Klappenvorrichtung (1) am letzten Lagerelement (6) angeordnet ist und der korrespondierende Ringmagnet (3) auf dem Ende der Welle (4) angeordnet ist.

10. Luftansaugkanalsystem für eine Verbrennungskraftmaschine nach einem der Ansprüche 2 bis 9, **dadurch gekennzeichnet, daß** der Zentrierring (11) einen in Achsrichtung des Zentrierringes (11) verlaufenden umlaufenden Steg (26) aufweist, welcher in eine korrespondierende Ausnehmung (27) im zweiten Gehäuseteil (8) ragt, welche im wesentlichen in Form einer Querschnittserweiterung der Durchgangsöffnung (14) im zum ersten Gehäuseteil (7) weisenden Bereich der Durchgangsöffnung (14) ausgebildet ist.

## Claims

1. Air intake duct system for an internal combustion engine, wherein the air intake duct system has an at least two-part housing, in which air intake ducts and recesses are constructed, into which a valve device can be inserted with positive locking via at least one bearing element, the valve device having a shaft, which is drivable by an adjusting device, at least one valve body arranged on the shaft and at least one of the bearing elements via which the shaft of the valve device is held rotatably in the air intake duct system, **characterised in that** arranged on the shaft (4) is a magnet (3) which is in active connection with a non-contact sensor (2) for feedback of the position, the sensor (2) being arranged in a centring ring (11) which is constructed in one piece with the at least one bearing element (6).

2. Air intake duct system for an internal combustion engine according to claim 1, **characterised in that** one of the housing parts (7, 8) has a through orifice (14) through which the sensor (2), which has a sensor housing (12), can be inserted into the centring ring (11) from outside after the two housing parts (7, 8) have been assembled.

3. Air intake duct system for an internal combustion engine according to one of claims 1 or 2, **characterised in that** the sensor housing (12) is arranged as fixed against rotation in the centring ring (11).

4. Air intake duct system for an internal combustion engine according to claim 3, **characterised in that** the centring ring (11) has a flattened area (15) which corresponds to a flattened area (16) of the sensor housing (12).

5. Air intake duct system for an internal combustion engine according to one of claims 2 to 4, **characterised in that** the internal dimensions of the through orifice (14) are larger in one housing part (7, 8) than the external dimensions of the sensor housing (12) arranged in the through orifice (14), the sensor housing (12) having a support face (17), arranged on an outer face (18) of the housing part (7, 8) lying perpendicular to the axis of the through orifice (14) with intermediate positioning of a seal (19).

6. Air intake duct system for an internal combustion engine according to one of the preceding claims, **characterised in that** the sensor housing (12) has a connector (13) for electrical connection to an evaluation unit.

7. Air intake duct system for an internal combustion engine according to one of claims 2 to 6, **characterised in that** the sensor housing (12) has a protuberance (20) in which a through bore (21) is constructed, through which, when the sensor (2) is inserted into the centring ring (11), a projection (22) protrudes, which is arranged on the outside of one of the housing parts (7, 8) so that the sensor (2) can be connected by non-positive locking to one of the housing parts (7, 8) by means of a fastening screw (24), in particular with intermediate positioning of a washer (25) which can be screwed into a bore (23) constructed in the projection (22).

8. Air intake duct system for an internal combustion engine according to one of claims 2 to 7, **characterised in that** the valve arrangement (1) can be placed into corresponding recesses (10) of the first housing part (7), the through orifice (14) is constructed in the second housing part (8) perpendicular to the shaft (4) and the magnet (3) is a ring magnet which is arranged round the shaft (4) and is in active connection with the sensor (2) which protrudes through the through orifice (14) into the centring ring (11) arranged between the shaft (4) and the second housing part (8) and the longitudinal axis of which stands perpendicular on the axis of the shaft (4).

9. Air intake duct system for an internal combustion engine according to claim 8, **characterised in that** the centring ring (11) is arranged on the end of the valve device (1) remote from the adjusting device on the last bearing element (6) and the corresponding ring magnet (3) is arranged on the end of the shaft (4).

10. Air intake duct system for an internal combustion engine according to one of claims 2 to 9, **characterised in that** the centring ring (11) has a circulating web (26) running in the axial direction of the centring ring (11) and protruding into a corresponding recess (27) in the second housing part (8), which is constructed substantially in the form of an extension of the cross-section of the through orifice (14) in the area of the through orifice (14) pointing towards the first housing part (7).

## Revendications

1. Système à canaux d'aspiration d'air pour un moteur à combustion interne, dans lequel le système à canaux d'aspiration d'air présente un carter en au moins deux parties, dans lequel sont réalisés des canaux d'aspiration d'air et des évidements, dans lesquels un dispositif à clapet peut être inséré par correspondance de formes au moyen d'au moins un élément de palier, le dispositif à clapet comportant un arbre qui peut être entraîné par un dispositif actionneur, au moins un corps de clapet disposé sur l'arbre et au moins l'élément de palier, au moyen duquel l'arbre du dispositif à clapet est supporté pour tourner dans le système à canaux d'aspiration d'air, **caractérisé en ce qu'**un aimant (3), qui est en liaison de coopération avec un détecteur sans contact (2) pour signaler une position, est disposé sur l'arbre (4), le détecteur (2) étant disposé dans un anneau de centrage (11) qui est réalisé d'un seul tenant avec le au moins un élément de palier (6).

2. Système à canaux d'aspiration d'air pour un moteur à combustion interne selon la revendication 1, **caractérisé en ce que** l'une des parties de carter (7, 8) comporte une ouverture de passage (14), par lequel le détecteur (2), qui comporte un boîtier de capteur (12), peut être inséré de l'extérieur dans l'anneau de centrage (11), après l'assemblage des deux parties de carter (7, 8).

3. Système à canaux d'aspiration d'air pour un moteur à combustion interne selon l'une des revendications 1 et 2, **caractérisé en ce que** le boîtier de détecteur (12) est disposé de manière fixe en rotation dans l'anneau de centrage (11).

4. Système à canaux d'aspiration d'air pour un moteur à combustion interne selon la revendication 3, **caractérisé en ce que** l'anneau de centrage (11) comporte un méplat (15) qui correspond à un méplat (16) du boîtier de détecteur (12).

5. Système à canaux d'aspiration d'air pour un moteur à combustion interne selon l'une des revendications 2 à 4, **caractérisé en ce que** les dimensions intérieures de l'ouverture de passage (14) dans l'une des parties de carter (7, 8) sont plus grandes que les dimensions extérieures du boîtier de détecteur (12) disposé dans l'ouverture de passage (14), le boîtier de détecteur (12) comportant une surface d'appui (17) qui, avec intercalage d'un joint d'étanchéité (19), est disposée sur une surface extérieure (18) de la partie de carter (7, 8) située perpendiculaire par rapport à l'axe de l'ouverture de passage (14).

6. Système à canaux d'aspiration d'air pour un moteur à combustion interne selon l'une des revendications précédentes, **caractérisé en ce que** le boîtier de carter (12) comporte un connecteur (13) pour la liaison électrique avec une unité d'analyse.

7. Système à canaux d'aspiration d'air pour un moteur à combustion interne selon l'une des revendications 2 à 6, **caractérisé en ce que** le boîtier de détecteur (12) comporte une extension (20) dans laquelle est ménagé un perçage de passage (21) par lequel, lors de l'insertion du détecteur (2) dans l'anneau de centrage (11), il dépasse un épaulement (22) qui est disposé à l'extérieur sur une partie de carter (7, 8), de telle façon que le détecteur (2) peut être relié à cette partie de partie de carter (7, 8), par conjugaison de forces, au moyen d'une vis de fixation (24), en particulier avec intercalage d'une rondelle (25), qui peut être vissée dans un perçage (23) qui est réalisé dans l'épaulement (22).

8. Système à canaux d'aspiration d'air pour un moteur à combustion interne selon l'une des revendications 2 à 7, **caractérisé en ce que** le dispositif à clapet (1) peut être mis en place dans des évidements (10) correspondants de la première partie de carter (7), l'ouverture de passage (14) est réalisée dans la seconde partie de carter (8) perpendiculairement à l'arbre (4) et l'aimant (3) est un aimant annulaire disposé autour de l'arbre (4), qui est en liaison de coopération avec le détecteur (2) lequel pénètre par l'ouverture de passage (14) dans l'anneau de centrage (11) qui est disposé entre l'arbre (4) et la seconde partie de carter (8), et dont l'axe longitudinal est perpendiculaire à l'axe de l'arbre (4).

9. Système à canaux d'aspiration d'air pour un moteur à combustion interne selon la revendication 8, **caractérisé en ce que** l'anneau de centrage (11) est disposé sur l'extrémité du dispositif à clapet (1) éloignée du dispositif actionneur, sur le dernier élément de palier (6) et l'aimant annulaire (3) correspondant est disposé sur l'extrémité de l'arbre (4).

10. Système à canaux d'aspiration d'air pour un moteur à combustion interne selon l'une des revendications 2 à 9, **caractérisé en ce que** l'anneau de centrage (11) comporte un rebord (26) s'étendant périphériquement dans la direction de l'axe de l'anneau de centrage (11), lequel rebord pénètre dans un évidement correspondant (27), dans la seconde partie de carter (8), qui est réalisé essentiellement en forme d'un élargissement de section transversale de l'ouverture de passage (14) dans le secteur de l'ouverture de passage (14) orienté vers la première partie de carter (7).
